# EUROPEAN PATENT APPLICATION

(11) **EP 0 836 801 A2**
(43) Date of publication of application: **22.04.1998**
(21) Application number: 97202412.9
(22) Date of filing: 01.08.1997
(51) Int. Cl.: A01G 9/10

(54) **Tray**

(30) Priority: 17.10.1996 NL 1004299
(71) Applicant: DYNOPLAST B.V., NL-6902 PB Zevenaar (NL)
(72) Inventor: Pieters, Joseph Leopold Maria, 6545 NA Nijmegen (NL)
(74) Representative: Van Breda, Jacobus

(57) **Abstract**

The invention relates to a carrier unit comprising a tray provided with cups for the reception of compressed plugs or loose fillings for the cultivation of sowing-seed. Said carrier unit is provided with at least two carrier elements which are detachably coupled to the tray. Each carrier element is substantially flat and is provided with supports placed perpendicularly on the surface of the carrier element, which supports are provided with recesses near the surface of the carrier element and serve to receive a rim of the tray.

## Description

The invention relates to a carrier unit comprising a tray, provided with cups to receice compressed plugs or loose fillings for the cultivation of sowing-seed.

Such a carrier unit or tray is known in practice and is used for the cultivation of lettuce, cabbage plants and the like. The known carrier unit is formed of polystyrene foam shaped to contain cavities which form the cups that are filled with the sowing-seed. The known polystyrene trays are placed on inverted plant pots in a greenhouse. However, the use of this known carrier unit is rather primitive, and is a burden on the environment because of the use of polystyrene foam. Also known are carrier units made from hard plastic.

The known tray has a surface measure of about 60 x 40 cm in which the cups are provided to receive the compressed plugs or loose filling material with sowing-seed.

It is the object of the invention to alleviate the disadvantages of the prior art carrier unit.

To this end the carrier unit according to the invention is characterized in that it is provided with at least two carrier elements which are detachably coupled to the tray. This allows the space in the greenhouse to be used much more efficiently while maintaining the effective placing space in the greenhouse. The space in the greenhouse that would otherwise be occupied by the carrier elements of the carrier unit has, by utilizing the invention, become effective greenhouse space.

The carrier unit is preferably constructed such that each carrier element is substantially flat and is provided with supports placed perpendicularly on the surface of the carrier element, which supports are provided with recesses near the surface of the carrier element, serving to receive a rim of the tray. In this manner the carrier element with the design of the attached supports may be completely adapted and optimized according to the design of the tray, so that said tray may be completely adapted to the use and the requirements of the intended application in market gardening.

A very desirable embodiment is one in which the tray possesses a longitudinally or circumferentially extending protective rim suitable for fitting into the recesses of the supports. This protective rim affords resistance against the shock load occurring in practice, so that there is less breakage and spoilage with regard to the trays in use. An additional advantage is that the protective rim can at the same time function as support rim when the supports are placed in said recesses.

Desirably, each carrier element comprises two supporting legs, each supporting leg being provided at its upper side with a projection and at its underside with a recess suitable to receive such a projection of another carrier element's supporting leg. This allows for a stable stacking of carrier elements. In practice carrier units which each consist of one tray having at both end-on sides a carrier element, are placed on top of each other in stacks of 22 high, each tray filled with compressed plugs weighing about 5 to 6 kg. By assembling the carrier elements and the tray which is provided with a protective rim as described above, it is possible to withstand the stress loads occurring in the construction of the stack.

It is desirable that the tray should be provided with a protective rim in which evenly distributed first aeration holes are provided. This promotes aeration in the separate cups in the tray, which is a prerequisite for the intended application of cultivating sowing-seed.

In this respect it is advantageous that the protective rim is somewhat higher than the cups are deep, and that the tray at the upper side has a rim bounded by a ridge, which rim is able to support the under side of another tray's protective rim. When placing the trays in greenhouses without the carrier elements being coupled thereto, the trays can easily be placed on top of each other without any problem for the sowing-seed on the trays thereunder. Additionally, this embodiment provides a safeguard against the trays' shifting in relation to each other because the ridge extending along the inside of the protective rim belonging to the tray placed thereon provides a bond for the stack. The above-mentioned aeration holes provided in the protective rim ensure that the sowing-seed in the underlying trays continue to be aerated. This is even furthered by the provision of second aeration holes in the upper surface of the tray at the intersection of adjacent cups.

A further preferred embodiment of the carrier unit is characterized in that each cup is substantially square having round corners at the top and sharp corners in the bottom. The round corners thereby providing the tray with rigidity, while the sharp corners serve to guide the roots in the cup.

A further improvement is provided if the top third of each cup exhibits an increased tapering from the top toward the bottom. This favours easy removal of the plant material.

In connection with the stacking of several trays on top of each other it is desirable that the tray between the adjacent cups is provided with tubes having round tops and which downwardly, past the tapering of the cups, finish square. These tubes, shaped as indicated, provide the tray construction with rigidity, so that in spite of the great strain exerted on it, it may be manufactured from relatively thin injection-moulding material.

It is further desirable that each cup in the round corners, at least in the part above the tapering, is provided with sharply defined guide channels to guide the roots.

It is also preferable that in the side of the bottom of each cup at least one drainage hole is provided. This very effectively prevents the growth of a root mat at the bottom of the tray, so that after the sowing-seed has developed, the plugs can easily be removed from the tray.

The invention is also embodied in a separate tray and a separate carrier element as described above, constituting part of the carrier unit.

The invention will now be further elucidated with reference to the drawing, in which
Fig. 1 shows the carrier unit according to the invention;
Fig. 2 shows separate carrier elements of the carrier unit according to the invention;
Fig. 3 shows a top view of a tray of the carrier unit according to the invention; and
Fig. 4 shows a perspective view of a single cup cut out from a tray of a carrier unit according to the invention; and
Fig. 5 shows a partial view of and in cross-section two trays of the carrier unit according to the invention stacked on top of each other.

Identical parts in the Figures are indicated by identical reference numbers.

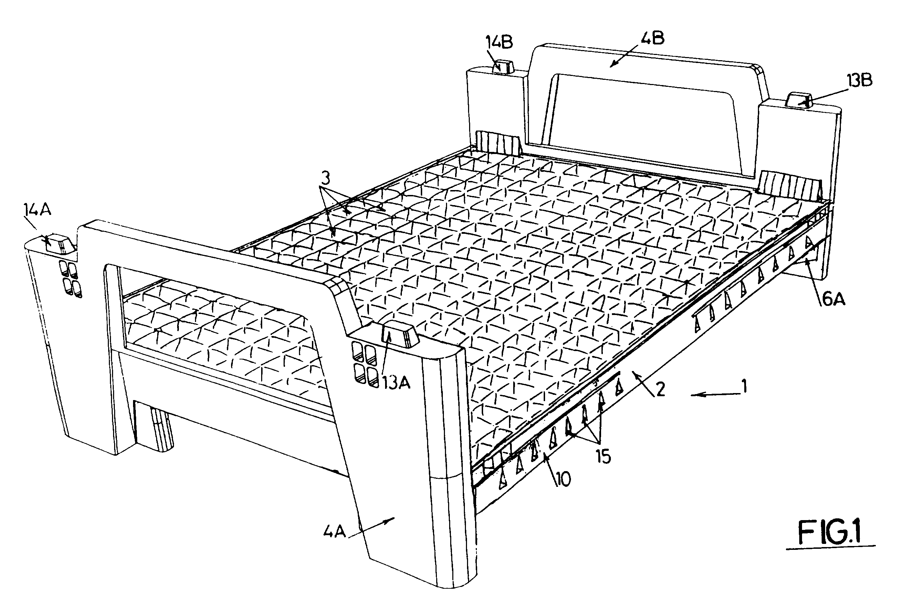

Fig. 1 shows a carrier unit 1 comprising a tray 2 for the reception of compressed plugs or loose fillings in cups 3, wherein at its end-on sides the tray 2 is provided with carrier elements 4A and 4B. These carrier elements 4A and 4B are detachably coupled to the tray 2.

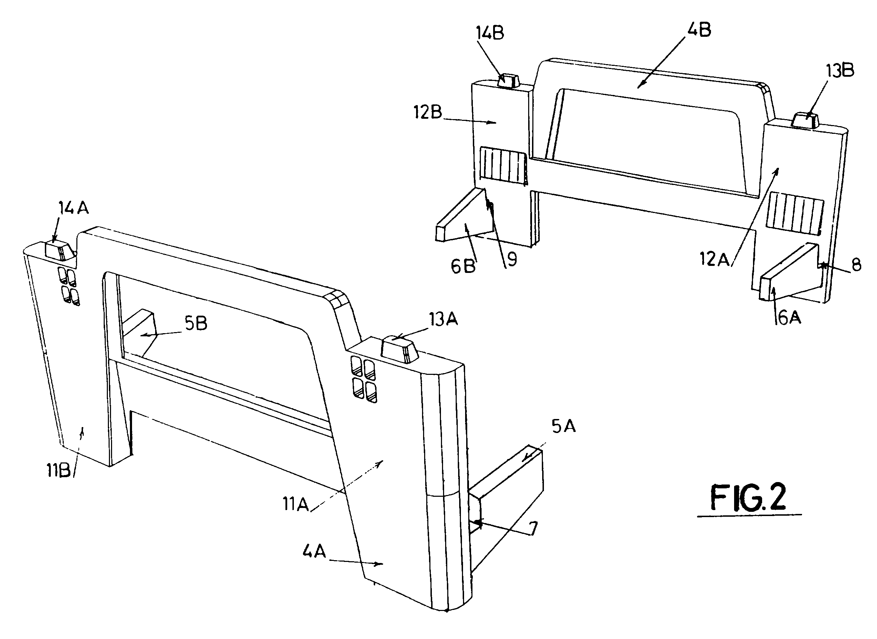

Fig. 2 clearly shows that each carrier element 4A , 4B is substantially flat and is provided with supports 5A, 5B and 6A, 6B placed perpendicularly on the surface of the carrier element 4A, 4B. These supports 5A, 5B, 6A, 6B are provided with recesses 7, 8 and 9 near the surface of the carrier elements 4A and 4B respectively. The recess of support 5B is not visible. Said recesses 7, 8, 9 serve to receive a rim of the tray 2.

Fig. 1 shows that the tray 2 possesses a circumferentially extending protective rim 10, suitable for fitting into the recesses 7, 8, 9 of the supports 5A, 5B, 6A, 6B. It is also possible to provide this protective rim on both longitudinal sides of the tray only. The carrier element 4A, 4B comprises two supporting legs 11A, 12A and 11B, 12B. Each supporting leg 11A, 11B, 12A, 12B being provided at its upper side with a projection 13A, 13B, 14A, 14B and at its underside with a recess (not shown) suitable to receive such a projection of another carrier element's supporting leg, thus allowing a stable stacking of the carrier elements.

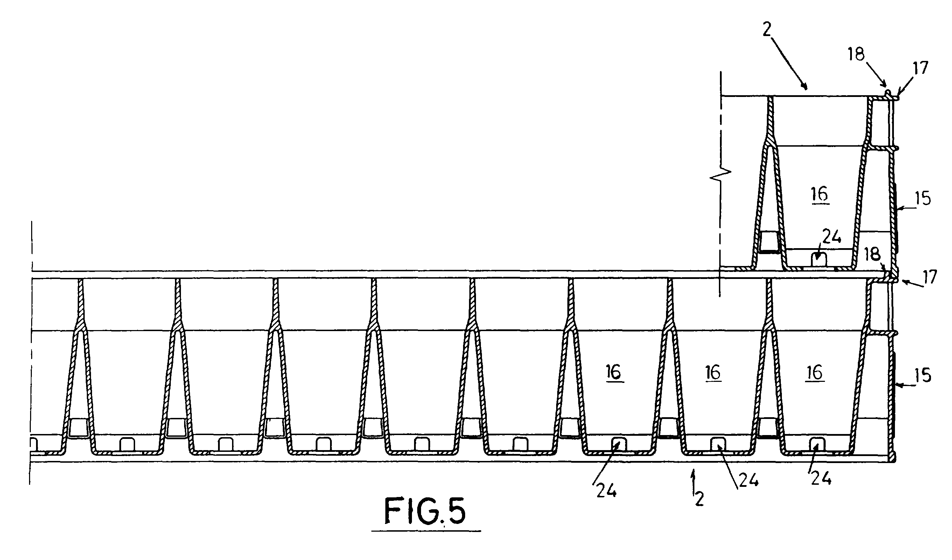

Fig. 1 also shows that the protective rim 10 is provided with evenly distributed first aeration holes 15, and Fig. 5 shows that the protective rim is somewhat higher than the cups 16 are deep, and that the tray 2 at the upper side has a rim 17 bounded by a ridge 18, which rim 17 is able to support the under side of a protective rim 15 of another tray 2.

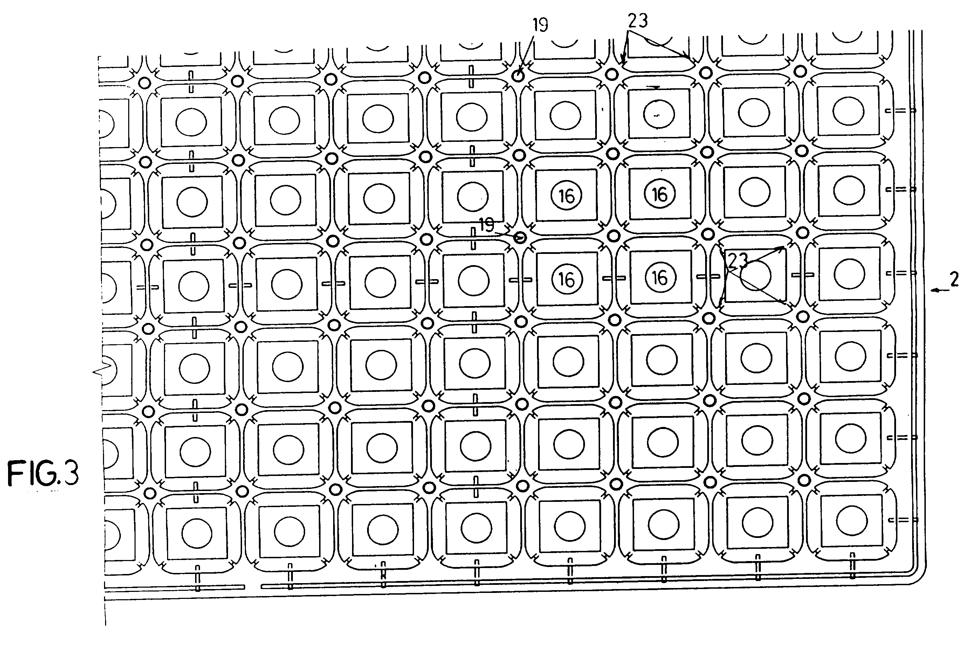

Fig. 3 shows that in the upper surface of the tray 2 at the intersection of adjacent cups 16 second aeration holes 19 are provided.

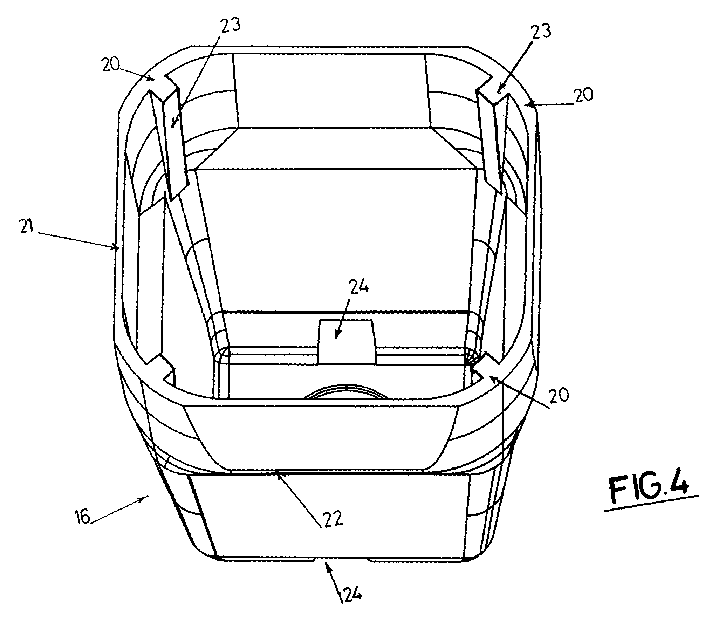

Fig. 4 shows a single cup 16, and the square shape is clearly visible with round corners 20 at the top. The top third of the cup 16 exhibits an increased tapering 22 from the top 21 toward the bottom. On the one hand this tapering 22 favours easy removal of the compressed plugs after the nursery material has been cultivated; on the other hand this makes it possible to provide the tray 2 between the adjacent cups 16 with tubes having round tops and which downwardly, past the tapering 22 of the cups, finishes square. Each cup 16 in the round corners 20, at least in the part above the tapering 22, is provided with sharply defined guide channels 23 to guide the roots. Also to aid guiding the roots, the cups 16 have at the bottom sharp instead of round corners. In the side of the bottom the cup 16 is further provided with at least one drainage hole 24.

## Claims

1. A carrier unit (1) comprising a tray (2), provided with cups (16) to receive compressed plugs or loose fillings for the cultivation of sowing-seed, **characterized** in that it is provided with at least two carrier elements (4A, 4B) which are detachably coupled to the tray (2).

2. A carrier unit according to claim 1, **characterized** in that each carrier element (4A, 4B) is substantially flat and is provided with supports (5A, 5B, 6A, 6B) placed perpendicularly on the surface of the carrier element (4A, 4B), which supports (5A, 5B, 6A, 6B) are provided with recesses (7, 8, 9) near the surface of the carrier element (4A, 4B), serving to receive a rim (10) of the tray (2).

3. A carrier unit according to claim 1 or 2, **characterized** in that the tray (2) possesses a longitudinally or circumferentially extending protective rim (10), suitable for fitting into the recesses (7, 8, 9) of the supports (5A, 5B, 6A, 6B).

4. A carrier unit according to claim 2, **characterized** in that each carrier element (4A, 4B) comprises two supporting legs (11A, 11B, 12A, 12B), each supporting leg being provided at its upper side with a projection (13A, 14A, 13B, 14B) and at its underside with a recess suitable to receive such a projection of another carrier element's supporting leg.

5. A carrier unit according to claim 1, 2 or 3, **characterized** in that the tray (2) is provided with a protective rim (10) in which evenly distributed first aeration holes (15) are provided.

6. A carrier unit according to claim 1-3 or 5, **characterized** in that the protective rim (10) is somewhat higher than the cups (16) are deep, and that the tray (2) at the upper side has a rim (17) bounded by a ridge (18), which rim (17) is able to support the under side of another tray's protective rim (10).

7. A carrier unit according to claim 1-3, 5 or 6, **characterized** in that in the upper surface of the tray (2) at the intersection of adjacent cups (16) second aeration holes (23) are provided.

8. A carrier unit according to claim 1-3, or 5-7, **characterized** in that each cup (16) is substantially square having round corners (20).

9. A carrier unit according to claim 1-3, or 5-8, **characterized** in that the top third of each cup (16) exhibits an increased tapering (22) from the top (21) toward the bottom.

10. A carrier unit according to claim 1-3, or 5-9, **characterized** in that the tray (2) between the adjacent cups (16) is provided with tubes having round tops and which downwardly, past the tapering of the cups, finish square.

11. A carrier unit according to claim 1-3, or 5-10, **characterized** in that each cup in the round corners (20), at least in the part above the tapering (22), is provided with sharply defined guide channels (27) to guide the roots.

12. A carrier unit according to claim 1-3, or 5-11, **characterized** in that in the side of the bottom of each cup (16) at least one drainage hole (24) is provided.

13. Separate tray constituting part of the carrier unit according to one of the preceding claims.

14. Separate carrier element constituting part of the carrier unit according to one of the preceding claims.
